Europäisches Patentamt

(19) European Patent Office

Office européen des brevets

(11) Publication number: **0 046 058**
**A2**

(12) # EUROPEAN PATENT APPLICATION

(21) Application number: **81303588.8**

(22) Date of filing: **05.08.81**

(51) Int. Cl.³: **G 01 N 21/89**

(30) Priority: **11.08.80 GB 8026077**

(43) Date of publication of application:
**17.02.82 Bulletin 82/7**

(84) Designated Contracting States:
**AT BE CH DE FR IT LI NL SE**

(71) Applicant: **The Wiggins Teape Group Limited**
**P.O. Box 88 Gateway House Basing View**
**Basingstoke Hampshire RG21 2EE(GB)**

(72) Inventor: **Hall, Robert James**
**"Halfyards" 165 Blind Lane Flackwell Heath**
**Near High Wycombe Buckinghamshire(GB)**

(74) Representative: **Bluff, John William et al,**
**c/o Lloyd Wise, Tregear & Co. Norman House 105-109**
**Strand**
**London, WC2R 0AE(GB)**

(54) Web monitoring apparatus.

(57) In order to detect defects such as holes and inclusions in the manufacture of a longitudinally-moving web (10), for example paper, three cameras (22a, b and c) each containing a line array (24) of photo-diodes, are imaged transversely across respective portions of the web. Each array is repetitively scanned to sample the photo-diodes in turn. The photo-diode video signals are digitised and sequentially stored in a random address memory (52) that is addressed in synchronisation with the sampling of the photo-diodes. Arithmetic circuitry (56. 58) subtracts the fresh digital value from a given diode with the value for that diode from the previous scan and signals a defect if the difference exceeds set limits. Logic circuitry (60) controlled by the sign of the difference signals whether the defect is a hole or inclusion. The fresh value is then entered in the memory to serve as a reference for that diode on the next scan. There is also described circuitry responsive to hole signals from the camera viewing the middle portion of the web to indicate when there is no web or an irregular web, and counting and indicating circuitry for the holes and inclusions.

FIG. 1.

./...

Fig. 4A

- 1 -

Title:  Web monitoring apparatus

FIELD OF THE INVENTION

This invention relates to apparatus for detecting defects in a lengthwise-moving web of material.

The invention has particular though not exclusive application in the manufacture of paper.  It may be necessary to monitor the web of paper produced by a paper-making machine for defects such as holes or inclusions in the web or blemishes on the surface of the web.

BACKGROUND TO THE INVENTION

Various proposals have been made to detect holes or inclusions. They include opto-mechanical systems such as disclosed in United Kingdom specification 1,381,878 in which light is reflected from resilient fingers in contact with the web to sense holes.  Noncontacting systems are preferred and may be realised with the aid of electro-optical arrangements detecting light transmitted by or reflected from the web.  For example, an array of photo-detectors can be arranged laterally of the web.  Such an arrangement is disclosed in United Kingdom specification 1,217,642.  With a non-imaged photo-detector array, the cells have to be mounted close to the web which may be inconvenient and attract dirt, and in practice provision has to be made to exclude unwanted light. Such systems are also sensitive to flutter in the web, i.e. in the direction perpendicular to its plane, so that the position of the web where it is monitored has to be accurately fixed by passing it over a special guide roller as in specification 1,217,642 or by passing the web between a pair of guide rollers between which the array is mounted.  This requires additional special provision to be made along the path of the web.

The photo-detector array can be mounted further from the web in an imaging system in which the array is made the image target of a "camera" such as disclosed in United Kingdom specification 1,115,892.  In this specification each photo-detector is connected to an

analysis circuit through its own amplifier. In practice such circuits are difficult to operate in an electrically noisy environment. They also require the individual amplifiers to be set up and then maintained at a precise and stable amplification. In addition the illumination of the web as a whole and one part relative to another if more than one illuminating lamp is used, has to be maintained stable.

Specification 1,217,642 above-mentioned suggests connecting the photo-detector amplifiers in differential pairs or into bridge circuits for noise reduction. Nonetheless, the circuitry requires accurate setting up and ability to maintain the settings, and the use of balanced pairs of photo-detectors requires detection of bipolar signals without being able to separate the kind of defect, hole or inclusion, giving rise to a particular signal.

An alternative optical arrangement to an array of photo-detectors physically extending or effectively imaged across the web is to laterally scan the web with a spot of light and monitor the light as reflected/ scattered from the web surface. This scanning technique can be done with a laser beam scanned across the web by use of a rotating multi-faceted mirror drum. The reflected light is picked up by a photo-detector, e.g. a photo-multiplier. The output varies with holes, inclusions or other surface blemishes scanned by the laser beam. Such laser beam scanning systems are disclosed in United Kingdom specifications 1,036,627 and 1,409,653. In this case a single amplifier/detector circuit is required for the photo-detector. Precautions may still be necessary to exclude unwanted light and the system is dependent on the amplitude stability of the laser source. In practice the response to the received light during a scan is non-uniform for a uniform web surface due to the fact that both the path length to the web and that from the web is continually changing during scanning. In scanning a wide web such as in paper making, it may be necessary to use a plurality of photo-detectors across the web. Their outputs are combined with weighting adjusted to provide a uniform response across the web although this is not usually realised. This again introduces the need for precise and stable electronic circuitry to maintain the desired net response.

A disadvantage of the scanning spot system as compared to a photo-detector system operative across the whole web is that a hole, perhaps of only 1 mm. diameter, may pass the line of scan when the spot is elsewhere and thus evade detection. Also of course the mirror drum requires to be mechanically driven continuously.

All the techniques outlined above require a stable and accurate detection reference to be established while, at the same time, accurate response may need to be maintained as between individual amplifier circuits and the like.

SUMMARY OF THE INVENTION

There will be described hereinafter apparatus for detecting one or more kinds of defect in a lengthwise-moving web that combines both photo-detector array and scanning techniques and that is without moving parts and effectively establishes an individual reference for each detector which is relatively insensitive to variations between individual detectors or a variation common to all such as the light source.

The invention is based on the concept of scanning an array of photo-detectors extending, preferably by imaging, across the width of the web, storing the individual light values, as represented by the separate outputs of the detectors, obtained in one scan for use as a reference in the succeeding scan. In practice this scan-by-scan comparison is achieved using digital techniques allowing fast scanning of the array. Fast scanning itself reduces the possibility of missing a defect. Additionally, by employing photo-detectors that respond with an integrating action to the light received over the scan interval, the possibility of missing a defect is reduced still further.

More generally stated, the present invention provides in a machine in which a web is moved lengthwise along a predetermined path, apparatus for monitoring at least a portion of the web for defects comprising:

a structure including an array of photo-detector devices responsive to the optical condition of the web at a zone along said path said devices being arranged for monitoring successive areas of the web extending transversely of the path;

a circuit into which said photo-detector devices are connected to develop a respective electrical signal representing the optical condition sensed by each photo-detector, said circuit including first means responsive to said signals to repetitively provide a sequence of corresponding signals in digital form;

a memory device having a plurality of storage locations capable of storing a sequence of digital signals derived from the photo-detectors;

comparison means coupled to said first means and to said memory device for comparing the digital signal derived from each photo-detector in one sequence with the signal derived from the same photo-detector in a previous sequence stored in the memory device and for indicating if the difference between the signals exceeds a prescribed limit;  and

control means coupled to the first means and the memory device for synchronizing the operation thereof to ensure digital signals relating to the same photo-detector are applied to the comparison means.

In this apparatus the first means preferably includes a scanning device coupled to the photo-detectors to produce the abovementioned sequence of digital signals derived from these detectors.   In the embodiment to be described the direct outputs from the photo-detectors are analogue signals and an analogue-to-digital converter (ADC) is used to generate the digital signals. Moreover the memory device is preferably an  addressable device, such as a random access memory (RAM) and the control means acts to address the memory device in synchronism with the operation of the scanning device.   It is convenient to allocate a respective memory location, and address, to each photo-detector and sample the photo-detectors and address the memory locations in the same sequence for every scan.

The addressable memory device may be used as follows.   The control means includes means for selectively coupling the first means to the memory device for transferring successive digital signals into memory storage locations and second coupling means for selectively coupling the memory means to a first input of the comparison means.   The latter has a second input that is connected to receive the current digital signal from the first means.   The control means is operative to actuate the second coupling means to allow the current digital signal for a given photo-detector to be compared with its predecessor stored in the addressed storage location of·the memory device, and to then actuate the first coupling means to transfer this current digital signal into the addressed storage location to replace the signal with which it was compared. In this way each photo-detector provides its own reference which enables the apparatus to adjust scan by scan to variations common to all the photo-detectors or affecting only some of them.

For purposes to be more fully described below in meeting the requirements of a paper-making machine to ensure the proper detection and handling of defect-indicative signals emerging from the comparison means, there may be provided means responsive to an indication given by the comparison means to inhibit transfer into the addressed storage location of the afore-mentioned current digital signal.   In this case, there may be provided a timer responsive to the indication given by the comparison means to provide a signal after a predetermined interval for ensuring all the storage locations of the memory device are then up-dated with the current digital signals derived from the photo-detectors.

To obtain continued monitoring of the web condition between samples of each photo-detector, there is preferably a respective integration arrangement associated with each detector.   The above-mentioned scanning device may be used to set each such arrangement to a predetermined state on each scan and to obtain, prior to that state being achieved, a signal representing the integrated response of the associated photo-detector since the previous re-setting. To this end each photo-detector may comprise a photo-diode and associated capacitance, which may be essentially the self-capacitance of the diode, this capacitance constituting the integration element of the associated integration arrangement whereby the capacitor charge is a function of the integrated conductance of the photo-diode. Each integration arrangement also includes a switch device controlled by the scanning device to charge the capacitance to a predetermined voltage upon re-setting the integration arrangement. The signal representing the optical condition sensed by each photo-diode may then be developed from the re-charge current to the capacitance upon such re-setting.

The comparison means used in the apparatus of the invention may be implemented with two digital arithmetic units, a first of which compares the current and a preceding digital value from a photo-detector to provide a digital output signal representing the difference between the values and a second of which is responsive to the digital output signal and to a preset digital value to provide a signal indicative of the difference exceeding the preset value. In addition logic means is provided responsive to the sign-indicative signal from the first arithmetic unit and to that from the second arithmetic unit to provide a defective-indicative signal when the difference between the two values exceeds the prescribed limit in at least one sense, i.e. either excessively high or low light level on the photo-detector, as set by the preset digital value. In the apparatus to be described the logic means is operable to provide one or other of two separate defect-indicative signals to indicate a hole or an inclusion in a paper web.

The apparatus to be described also comprises an arrangement for giving an indication on no web or an irregular web. To this end there is provided a comparator that is responsive to the series of respective electrical signals derived from the photo-detectors, i.e. analogue signals, or to the corresponding digital signals to provide an output signal for each such signal that exceeds a reference level or reference digital value, a gate controlled by the comparator output signal for transmitting clock pulses from the aforementioned control means whenever a signal of the series exceeds the reference level or value, a counter connected to the output of the gate to count clock pulses transmitted by the gate; and a timer circuit controlling the operation of the counter, the timer being triggered by the comparator output signal to enable the counter to count clock pulses for a preselected period. If the count value exceeds a predetermined value, a signal is provided that is used to indicate that no web is present.

In order that the invention and its practice may be better understood, an embodiment of it will now be described with reference to the accompanying drawings.

BRIEF DESCRIPTION OF THE DRAWINGS

Figures 1 and 2 show in diagrammatic form the manner of installation of apparatus embodying the invention to monitor the web in a paper-making machine, Figures 1 and 2 being taken respectively transversely of and longitudinally along the web;

Figure 3 is a simplified block circuit diagram of circuitry for developing a video signal from a camera shown in Figures 1 and 2, each camera having such circuitry associated therewith:

Figures 4A and 4B together show in block diagram form a circuit, for one camera, for processing the video signal to provide defect-indicative signals; and

Figure 5 compressing Figures 5A and 5B shows in block diagram a circuit (Figure 5A) for detecting the absence of a web and circuitry (Figure 5B) for analysing the defect-indicative signals generated by the respective camera circuits according to Figure 4.

DESCRIPTION OF THE PREFERRED EMBODIMENT

The embodiment of the apparatus to be described is intended for use with a paper-making machine. The following functions are provided:

(1) signalling of any hole detected. In practice detection of holes of 0.5 mm. diameter or greater is aimed at;

(2) signalling of inclusions exceeding a predetermined number per unit area (inclusion rate): this function may include monitoring for inclusion rate in respect of inclusions exceeding a given size;  or

(3) signalling the presence of a surface blemish such as residual slime remaining in the web by treating the blemish as an inclusion exceeding a given size.

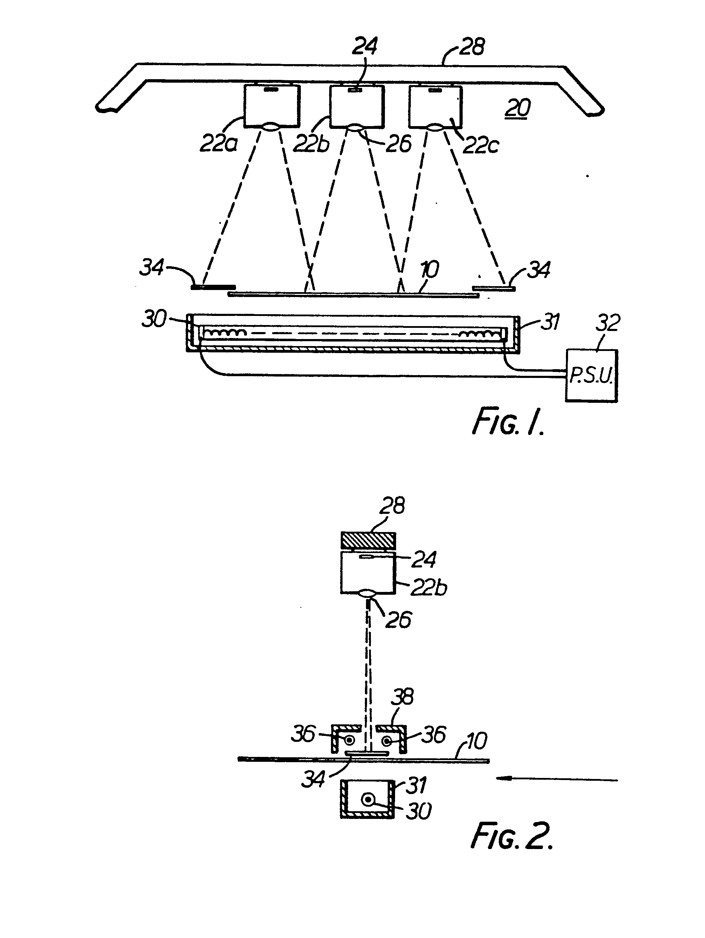

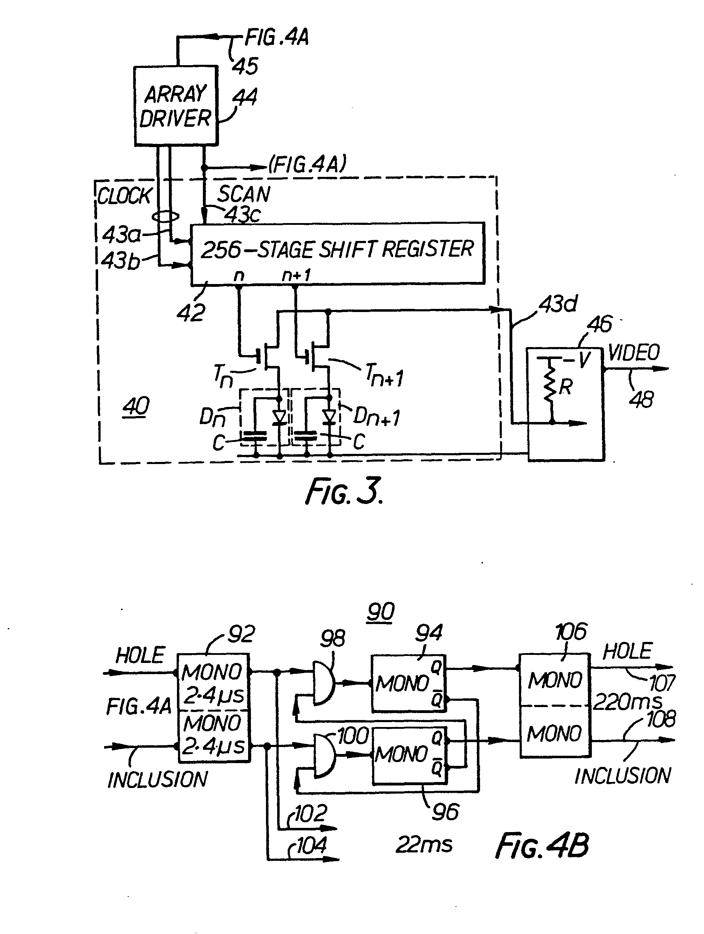

The general layout of the apparatus is shown in Figures 1 and 2.  A web 10 is shown moving lengthwise in a horizontal plane, as indicated by the arrow in Figure 2, upon exiting a paper-making machine and prior to entering the wind-up roll.  The paper is inspected at this point for holes or other defects.  To this end, an electro-optical scanning arrangement 20 is located above the web and as best seen in Figure 1 it comprises three cameras 22a, 22b and 22c, each comprising a scanning photo-diode array 24 and a lens 26 by which the array is imaged across a little over one third the maximum width of web for which the apparatus is designed. In some cases a single camera might be sufficient.  The number of cameras used depends on the maximum web width to be monitored, the resolution required and the number of photo-diodes available in a single array.

The lens 26 used in each camera is a 28 mm. focal length, wide angle lens. The cameras are supported from a gantry 28 extending across the web perpendicular to its direction of movement. They can be well spaced from the web which is of advantage in avoiding pick up of dirt or other particles and need no retraction mechanism to withdraw them from the web path in feed up of the paper through the machine. The lens employed has a good depth of focus which renders the cameras relatively insensitive to flutter in the web and avoids the need to insert special guide rollers to locate the web accurately in the wanted horizontal plane. The use of a lens-based optical system also has advantage in maintaining a good signal-to-noise ratio as the inverse square relationship of intensity to distance does not apply.

The underside of the web is illuminated by a strip-light 30 extending across the whole width of the web to accommodate the widest width of web to be monitored. The strip-light, which may comprise more than one tube, is of the continuous filament type extending the length of the tube. The illumination across the web should be as uniform as possible, though this is not unduly critical. The strip light 30 may be located in a trough 31 having its mouth open toward the web and is energised by a D.C. power supply unit 32 which avoids an A.C. ripple component in the output of the photo-diode arrays. The strip light can be placed well below the web path again avoiding the need for a retraction mechanism for paper feed-up. Shades 34 are placed over the ends of the strip light not covered by the web to prevent light from reaching the cameras directly. The shades are placed to slightly overlap with edge margins of the web as is seen in Figure 1. This measure avoids spurious signalling at the edge of the web which may have irregularities.

By locating strip light 30 on the opposite side of the web to the cameras holes are detected by the higher light level transmitted thereby. Inclusions may also be detected in some papers, such as tracing papers, where

inclusions will locally reduce the light transmittance. In more opaque papers where normal transmittance is low inclusions are detected by energising further strip lights 36 located on the camera side of and extending across the web, the lights 36 (Figure 2) being screened from direct radiation into the cameras by trough 38. The further lights are sufficiently spaced to allow the cameras to see the web. In this case the cameras are seeing light scattered from the web and the scattered light is locally reduced by inclusions.

In the embodiment illustrated, each of the cameras uses a photo-diode array onto which approximately one-third of the web is imaged by the respective lens. This is indicated by the dashed lines in Figure 1. In Figure 2 the length of web scanned is much less as indicated by the dash lines, being effectively the width of one diode imaged onto the web. The photo-diode array chosen for this application is not simply a set of photo-diodes each providing an instantaneous output signal dependent on the light impinging on the diode, but rather is an array in which each diode junction discharges the self-capacitance of the diode at a rate dependent on the impinging light. This provides an integrating action with respect to the impinging light which is of particular value in the practice of the present invention. The arrangement and action of the diode array is discussed more fully hereinafter. Suitable photo-diode arrays are made and supplied by Integrated Photomatrix Limited, The Grove Trading Estate, Dorchester, Dorset DT1 1SY, United Kingdom. Each camera contains a device type IPL 7256 which contains a line array of 256 diodes within a length of about 25 mm. The line of diodes is arranged in the camera in alignment with the transverse axis of the web.

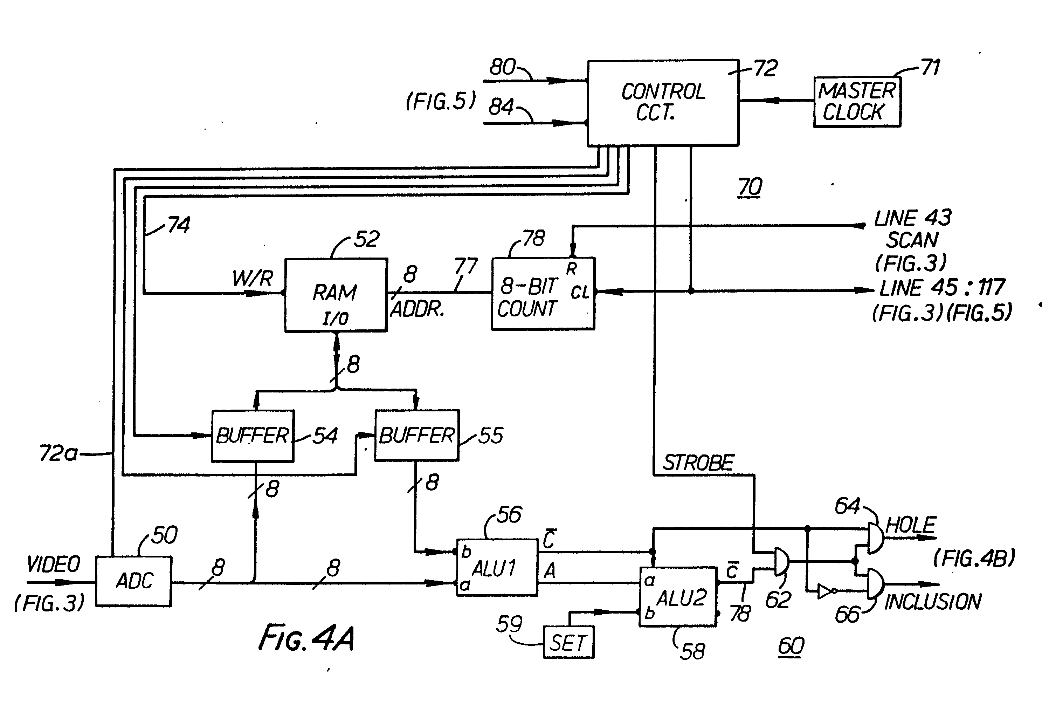

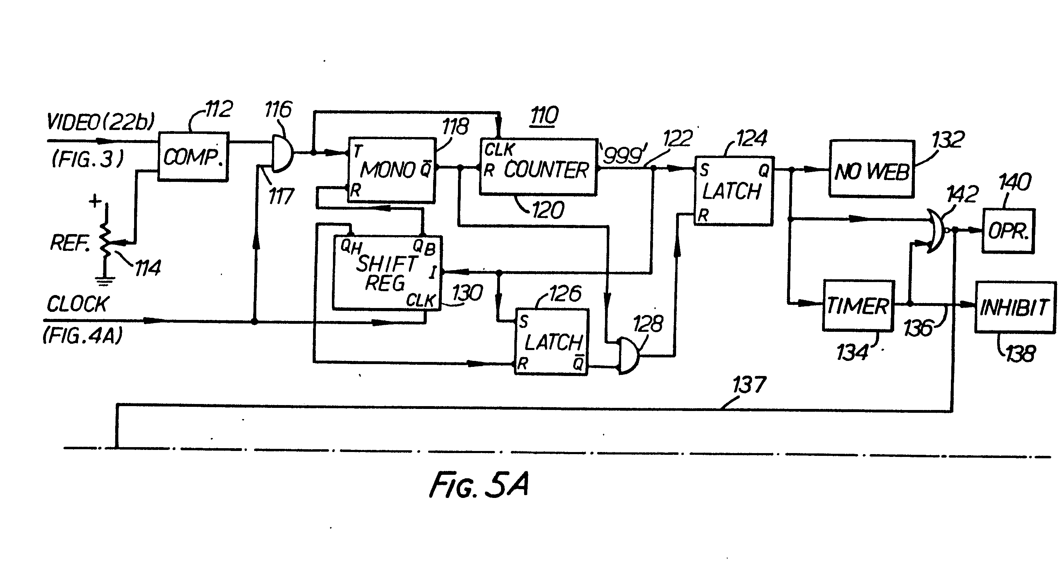

Figure 3 illustrates in block diagram form circuitry associated with the scanning of the array and processing of signals from the array. The circuitry will only be described insofar as its operation is specifically relevant to an understanding of the operation of the apparatus of the invention. Further detail literature is available from Integrated Photomatrix Ltd.

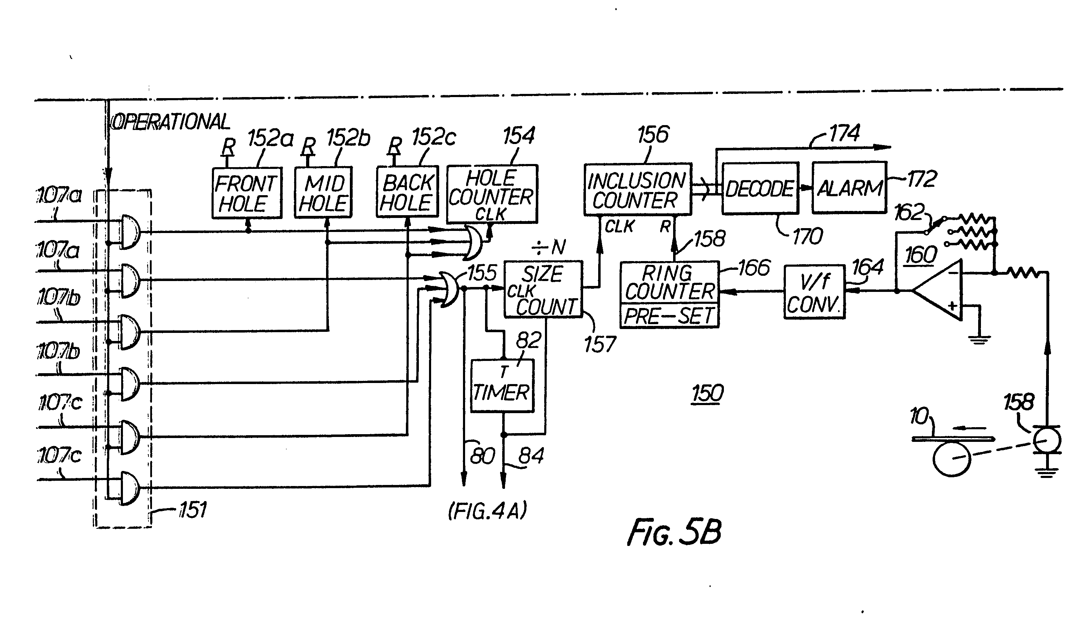

In Figure 3 the array device is indicated as block 40. Device 40 includes its own 256-stage shift register 42 for sequentially scanning the photo-diodes D two of which, $D_n$ and $D_{n+1}$, are shown at positions $\underline{n}$ and $(\underline{n} + 1)$ in the array. A two-phase clock signal and a scan start pulse are applied to the shift register 42 on lines 43$\underline{a}$, 43$\underline{b}$ and 43$\underline{c}$ respectively from an array driver unit 44 which is available with relevant data under the type No. PCM 74 from Integrated Photomatrix Ltd. The array driver is timed by signals on line 45 derived from a master clock shown in Figure 4A. The scan pulse is propagated through the shift register at a rate determined by the clock pulses. The use of a two-phase clock is a requirement of the device specified and need not be discussed further here. The shift register also produces an "end of scan" signal that is not used here. The start and end of scan signals enable the diode arrays of the three cameras to be scanned as one continuous array of 768 diodes, if desired. In the circuitry to be described each camera array is scanned separately, although the scan rates are the same, and the signal analysis for each array is performed independently, the scan pulses being used in synchronizing the scanning to the analysis.

The device 40 has an output 43$\underline{d}$ from which a sequence of sampling signals is obtained as the photo-diode array is scanned. This output is connected to a processor unit 46 which converts the charge signals from the array into voltage signals, called video, suitable for further analysis. The input circuit of processor unit 46 includes, in a much simplified representation, a sampling resistor R through which the output line 43$\underline{d}$ is connected to a voltage source (-V) of a polarity to reverse bias the photo-diodes D

via line 43d. The processor circuit may be the unit type PCM 75 available from Integrated Photomatrix Ltd. The array is operated in what is known as the recharge sampling mode which is particularly suitable for the practice of the present invention.

It is seen that each photo-diode D is connected to the output line 43d via a MOSFET transistor T (also called transfer gate) whose gate electrode is connected to a respective stage of shift register 42. Each photo-diode has an internal capacitance C which is shown as a separate capacitor in parallel with the diode. The diode conductance is a function of the light intensity impinging on the diode and serves to discharge the capacitor C when the associated transistor T is off.

As the diode array is scanned by shifting an applied scan pulse through the register at a rate determined by clock pulses, the scan pulse propagating through the shift register stages turns on the transistors T in succession thereby successively resetting the diodes to a predetermined state by charging each diode capacitance C to the bias voltage -V via sample resistor R. During the interval before the next scan pulse is applied to a given transistor T, the associated diode capacitance is discharged through the diode in accord with the light intensity falling on the diode. The diode and capacitor thus perform an integrating function on the light impinging on the diode over the scan interval. Thus all light changes during the interval are effective to influence the diode capacitance discharge. By making the scan rate sufficiently fast it can be ensured that all holes and inclusions of say 0.5 mm. or more imaged onto a given diode occupy a sufficient proportion of the scan interval to significantly influence the residual charge of the diode at the end of the scan interval. A hole will increase the light falling on the diode and its conductance to more rapidly discharge the diode capacitance C: an inclusion will have the opposite effect. When the next scan pulse is applied to a transistor T a current pulse is supplied through resistor R that has a magnitude that represents the charge lost by the
associated diode capacitance in the preceding scan interval.
Thus, as the array is scanned a series of current pulses occur
in resistor R and the corresponding resistor voltages are further
processed in unit 48 which includes a boxcar output stage so that
the scanned output is a series of voltage steps on line 48, the
amplitude of each of which is a measure of the charge lost by the
associated diode capacitance in the preceding scan interval.

The above described mode of operation is particularly
suitable for the present purposes in that high scan rates may
be achieved and in combination with the specific processor unit
mentioned a high linearity is achievable between the output
voltage and the light intensity impinging on any diode.

Each of the three cameras 22a, b and c has the circuitry
of Figure 3 thus far described built in so as to produce a
separate video output.  However, the common master clock source
is applied to all cameras for derivation of the individual array
scan and clock pulses and to time the operation of any analysis
circuit, one for each camera video output and the block diagram
of which is shown in Figures 4A and B.

The video signal is a series of flat top samples due to
the boxcar action in processor 4$ and each sample thus lasts at
its measured value until supplanted by the next sample.  It is
currently envisaged to scan each photo-diode array at a rate of
about 697 scans/second with a diode sampling period of 5.6$\mu$S.
Consequently all the analysis pertaining to a particular diode
has to be performed within the sampling period.

Referring to Figure 4A, the video signal is applied to an
analog-to-digital converter (ADC) 50, for example device type
ADC 1109 made by Analog Devices which converts each analogue step
to an equivalent 8-bit digital value.  The ADC output is taken
on the one hand to the input/output (I/O) port of a memory device
52 through a buffer stage 54 and on the other hand to one
input (a) of an arithmetic and logic

unit (ALU) 56.   The unit 56 has a second input (b) connected
to the I/O port of memory device 52 through a buffer stage 55.
The unit 56 is operative to compare the sequence of digitized
values from one scan with the corresponding values in the sequence
of the previous scan in a manner to be described.

The output of the arithmetic unit 56 is connected
to one input (a) of a second, similar, unit 58 whose second input
(b) is connected to a device 59, such as mechanically settable
thumbwheel switches, for setting in limits with respect to which
the unit 58 operates to decide whether the results of comparisons
at the output of unit 56 represents acceptable or marred paper.
The units 56 and 58 operate in conjunction with the decision logic
60 which indicates whether a defect is a hole or inclusion.
This is described below.

The operating sequence of the circuit of Figure 4 is
controlled by a timing circuit 70 which itself is timed to the
already-mentioned master clock indicated as 71, e.g. running at
10MHz.   The timing circuit includes control signal generating
means 72 which supplies timed signals to the ADC to start each
analog-to-digital conversion and to the buffer stages 54 and 55
to transfer data into and out of the memory device 52.   The
buffer stages are of the three-state type for this purpose.   It
also supplies a write/read signal to the memory on line 74.
The memory device comprises a 256-byte random access memory
(RAM), each byte comprising 8-bits.   Thus there is a  respective
address in the memory for each photo-diode of the associated camera
array.   These addresses are sequentially accessed in synchronism
with the scanning of the array by means of 8-bit addresses supplied
over address line 77 from a clocked address generator 78, e.g.
an 8-bit binary counter, that is clocked at the same rate as the
photo-diode array.   To synchronize the memory address scan
with that of the array the address generator is re-set by each
scan pulse applied to the array (Figure 3).   The correct sequence of timing signals from circuit 70 is obtained for example by decoding of the outputs of a binary counter and with the aid of shift registers which techniques are well understood in the art. The required sequence of timing signals will become clear from the following description.

At the end of an array scan the RAM 52 will contain the digitized light values registered by the photo-diodes during that scan. During the succeeding scan, when the capacitance of a given array diode is recharged by turning on the associated transistor T (Fig.3), the corresponding step appears in the video signal at the appropriate amplitude. A timing pulse is applied to ADC 50 on line 72$\underline{a}$ to convert this amplitude to a corresponding 8-bit digital signal that is applied to the $\underline{a}$ input of arithmetic unit 56. At the same time the address associated with that photo-diode is applied to the memory together with the read signal level on line 74. The buffer stage 55 is enabled (buffer 54 is inhibited) to transfer the 8-bit value at the selected address to the $\underline{b}$ input of the arithmetic unit. After a fixed interval timed from the master clock the buffer 55 is inhibited and the buffer 54 is enabled while at the same time the write level is set on line 74 thereby causing the ADC output value to be transferred into the selected address in the memory. Thus each stored value is used for comparison and then replaced by the current value with which it has just been compared to provide an up-dated stored value for use as the comparison value on the next scan.

In the fixed interval just-mentioned the arithmetic units 56 and 58 are operable to act on the values supplied to unit 56 which values for convenience will be referred to as $\underline{a}$ and $\underline{b}$ in conformity with the inputs. The first unit 56 subtracts the memory value $\underline{b}$ from the ADC value $\underline{a}$. This is done by the procedure:

$$\Delta = a - b = (a + \bar{b}) + 1$$

where $\bar{b}$ is the binary complement of $\underline{b}$.

The summation generates a carry bit at a $\overline{\text{carry}}$ output $\overline{c}$ if a > b or a = b. The carry bit signal is a high level on line 76. If a < b there is no carry and the level on line 76 is low. If a $\geqslant$ b then the value of output $\Delta$ from unit 56 directly represents the difference between the ADC and stored values. If, however, a < b, the output does not directly translate into the difference (negative) but with the aid of the carry level on line 76 it is usable by the second unit 58. While the carry bit signal represents the sign of the difference, one level includes the zero difference condition, which is in any event immaterial because clearly there can be no exceeding of the set limit to be detected by the second arithmetic unit as will now be explained.

The value $\Delta$ or (a-b) representing the "difference" is applied to the a input of arithmetic unit 58. The carry level on line 76 is applied as a separate control signal to this unit whose function is to determine whether the magnitude of the difference entered at the b input of unit 58 exceeds a limit set by pre-settable device 59. If the difference magnitude exceeds the set limit the $\overline{\text{carry}}$ output $\overline{c}$ of unit 58 is high, a hole is indicated by logic 60 by combining such indication with a high carry level on line 76 from unit 56 and an inclusion is indicated by combining the indication with a low $\overline{\text{carry}}$ level from unit 56 on line 76.

The operation of ALU2 is as follows. There are two cases:-

(i) If the carry level on line 76 is high (a $\geqslant$ b in ALU1), then if s represents the set limit, a simple subtraction is performed by unit 58:

$$s - \quad = s - (a - b) = (s + b) - a,$$

where a and b refer to the values applied to ALU1.

If s        then the $\overline{\text{carry}}$ on line 78 is low (no defect).

If s        then the $\overline{\text{carry}}$ on line 78 is high which is the condition indicating a defect, i.e. the difference exceeds the limit s.

(ii)    If the carry level on line 76 is low, then if $s$ represents the set limit, the complement of $\Delta$ is taken in ALU2 and a summation is performed generating a carry output on line 78:

$$s + \overline{\Delta} = s + \overline{(a - b)}$$

If $s > \Delta$ then the $\overline{\text{carry}}$ on line 78 is low (no defect).

If $s < \Delta$ then the $\overline{\text{carry}}$ on line 78 is high, which is the condition indicating a defect.

The combining of the carry signals to specifically indicate a hole or inclusion is performed by the logic circuitry generally shown as 60 in Figure 4A.    For ease of understanding of the logic functions, AND-gates are shown though in practice NAND-gates will be more likely used.    The defect-indicative signal (high) on line 78 is applied via a strobe AND-gate 62 to a respective input of a pair of two-input AND-gates 64 and 66 whose other inputs respectively receive the carry and inverted carry signal on line 76.    Consequently, upon a defect being signalled by arithmetic unit 58 by its $\overline{c}$ output being high, it is resolved into a hole or inclusion by the gates 64 and 66 in dependence upon the relative magnitudes of the $a$ and $b$ inputs of arithmetic unit 56 as signalled by the carry level on line 76.    Thus a high output from gate 64 indicates a hole;  a high output from gate 66 indicates an inclusion.

The strobe signal applied to gate 62 is generated from the timing control circuitry 72 and is timed to ensure that gages 64 and 66 are inhibited until the units 56 and 58 have performed their arithmetic operations.    It will be recalled that for each photo-diode the previously stored value and the current value are available from the memory 52 and ADC 50 respectively for a fixed interval before the current value is then written into the memory address for that diode by enabling buffer 54.    The strobe signal is generated as a short pulse just before the inhibiting of buffer 55 at a time when the arithmetic units will have settled.    With regard to the time available to perform the arithmetic comparisons, it will be recalled that each video step applied to the ADC 50 lasts $5.6\ \mu$S.

Of this period $4\mu$ S is allowed for the analog-to-digital conversion. Consequently all remaining operations have to be timed within the last $1.6\mu$ S of the step period. To this end the master clock 71 may be run at a high rate, e.g. 5 or 10 MHz, to achieve adequate resolution of the timing signals, The strobe signal may be a high level pulse of say $0.1\mu$ S duration and consequently the hole or inclusion pulse, if generated, is only of that length. For subsequent processing the hole or/and inclusion pulses are stretched by the circuitry generally indicated at 90 on Figure 4B.

Before considering Figure 4B in more detail, it will be appreciated that the arithmetic and logic units 56 and 58 and associated circuitry provide a means for comparing each new digital value derived from a given photo-detector with that derived from the same detector on the previous scan in order to ascertain whether the new value exceeds a prescribed limit, plus or minus, with respect to the old value. Different plus and minus limits could be utilised with two arithmetic units 58 working with different preset values. The following logic circuitry 60 is then adapted to the two units to select the respective hole and inclusion conditions.

Referring now to Figure 4B, the outputs of AND-gates 64 and 66 are applied to a pulse stretcher 92 which comprises respective monostables (e.g. type 556 devices) responsive to the short pulse outputs of the gates to stretch the hole and inclusion pulses a duration of $2.4\mu$ S. These pulses are then used to trigger cross-coupled monostables (e.g. type 74121 devices 94 and 96, the cross-coupling being effected by AND-gates 98 and 100 that receive the respective stretched hole and inclusion pulses. Each is thus dependent on the other monostable so that the gate 98 is inhibited to trigger hole monostable 94 while the inclusion monostable 96 is active, i.e. it is producing a pulse at its Q input; and _vice versa_. Each monostable 94 and 96 produces a pulse of 22 mS. duration when triggered. The reason for the cross-coupling is as follows.

Assume both monostables 94 and 96 are quiescent. A hole is detected and monostable 94 is triggered to produce a 22 mS. pulse, for which time monostable 96 is prevented from being triggered by an "inclusion". An apparent inclusion will be signalled at the end of the hole. Typically in a paper making, the web is moving at about 1.2 m/sec. The scan area of a photo-diode is assumed to be 2.4 mm. A 1 mm. hole detectably coincides at least partly with the scan area for 3.4 mm. which is a period of 4.1 mS at the quoted web speed. A larger hole is partly coincident for a longer period. For a scan period of 1.4 mS., the hole will be scanned at least twice as it passes through the field of view of the diode. All the light values of successive scans of that diode are successively entered in the memory 52. Consequently, as the rear edge of the hole is passed and scanned the new light value is less than that previously stored and the arithmetic and logic circuitry of Figure 4A will interpret the fall as an inclusion. The pulse from the hole monostable 94 is long enough to blank out what would be a spurious inclusion response by monostable 96. The converse situation of a spurious hole arises at the end of detection of an inclusion. Clearly the pulse lengths of monostables 94 and 96 are chosen with regard to the parameters of the process being monitored. By making them sufficiently long, it is a fair assumption that by the time the just-described inhibition ceases, the defect giving rise to the pulse will have passed out of the field of view; and by this time the memory address pertaining to that diode will once again be recording the normal values from the web.

Depending on the nature of the circuitry, still longer pulses may be desired, to operate relays for example and Figure 4A shows the use of a still further monostable pulse stretcher 106, e.g. a dual 556 type device, for stretching the hole and inclusion pulses to 220 mS. on lines 107 and 108 respectively.

At this point, it is worth noting that a specific realization of the circuitry of Figures 4A and 4B is provided for each camera. It will be appreciated that by organising the memory on a sufficient scale, it could cope with a single scan across the three cameras with a single unit of the arithmetic and logic circuitry and so on. However, the lesser circuitry required has to be balanced against the longer time per scan and the fact that a defect detected anywhere across the web will blank out all further detection for the period of monostable 94 or 96. Thus there is advantage in subdividing the web width into sections and scanning each individually. An inhibition on one section does not then affect the remainder.

Mention has already been made of the overlap between the web sections scanned by the three cameras. An appropriate overlap is, say, equivalent to three photo-diodes. Assuming the cameras are scanning independently it can, of course, occur that overlapping diodes will detect the same defect, though the respective video signals will not be given simultaneously if, looking at Figure 1, the camera scans are synchronized to be moving simultaneously from right to left, for example. The double signalling of the one event is not a problem in the present apparatus as will be made clearer hereinafter. It will be noted that those diodes imaged on the shades 34 will not give "inclusion" indications since their normal light level will be appropriate to that condition. Since each photo-diode effectively establishes its own reference variations in illumination across the web can be tolerated as can the inevitable tolerance in response among the diodes of an array (specified at 5% in the array device quoted). General slow variations in conditions, say the light output of the source 30 or 36, are also automatically taken into account in the values stored in memory 52.

One circumstance in which a general variation is usefully indicated is that of "no web". It is desirable to prevent hole/inclusion indication not only when no web is present but importantly when the web may be irregular on feed up of the paper-making machine.    Figure 5 shows circuitry which inhibits operation until a proper web is established. It should be mentioned also that "inclusion" discussed above includes other defects such as surface slime that reduce the transmissivity or surface reflectance of the web, a point dealt with in connection with Figure 5.

Referring to Figure 5, one part 110 of the circuit thereshown is for NO WEB detection.    This is particularly used when the paper-making machine is running up and initially no web or only a partial web is present.    In these circumstances no registering of apparent hole or inclusion signals is desired.    The NO WEB condition is characterised by a continuing high light level on at least a group of the photo-diodes and can be distinguished from a high light level of relatively short duration on one or more photo-diodes due to a large hole in the web.    The circuit 110 is supplied with the video output from that circuit of Figure 3 connected to the middle camera 22b of Figure 1.    The video output is applied to one input of a comparator 112 whose other input has a reference voltage selected by potentiometer 114 at a level in excess of that of the background video amplitude such that a fully exposed diode will provide a video signal whose amplitude exceeds the reference level.    The comparator output controls one input of an AND-gate 116 to whose other input 117 is applied clock pulses at the same frequency as used for scanning the photo-diode array of camera 22b.    The output of gate 116 goes to the trigger input T of a timer (monostable) 118 (using e.g. a type 555 device) such that the comparator enables the gate to transmit clock pulses to trigger the timer as soon as the video level exceeds the set reference level.    The timer circuit is of the kind that is triggered by the first clock pulse and then ignores further clock pulses until the timer has reset at input R.    In this case the timer is chosen to provide an output pulse of 220 mS duration unless reset beforehand. The timer output is applied to the reset input R of a counter 120 which is operable to count the clock pulses transmitted by gate 116. The counter is normally held reset by the timer output but commences counting whenever the timer is triggered and thus is operable to count clock pulses for 220 mS.

The control exercised over the gate 116 by the comparator 112 ensures that clock pulses are only counted for video steps in excess of the reference. Consequently as the photo-diode array is scanned one clock pulse is registered for each diode receiving the high level. The counter is arranged to produce an output on line 122 upon reaching a preselected count value. This value must be reached within the timer period or else the counter will be reset. The preselected count value is chosen to be sufficiently high to exclude activation of line 122 by the count values achieved by one or more photo-diodes for detecting a large hole over a number of array scans. With the scanning parameters discussed above, the counter 120 can be a three decade counter (e.g. 3 of device type SN 74290) with a decoder coupled to pulse the line 122 at the count value "999" which would be reached at a time in excess of three complete scans of a totally exposed photo-diode array. The value chosen is not especially critical.

While a hole of any size may activate the timer, a single such hole, or multiplicity of such holes, does not achieve a sufficient count value before reset. If the counter output is activated it sets two set-reset type latches 124 and 126. The latch 124 provides an output which is used for NO WEB signalling as will be described later. The latch 126 controls the reset of latch 124 through AND-gate 128 as will become apparent from the next following description.

At the same time as setting the latches the counter 120 applies an input pulse to the input I of an 8-stage shift register 130 connected to receive the clock pulses directly, i.e. not dependent on the state of gate 116. Thus this input pulse is shifted into the first stage of the shift register. The next clock pulse shifts the pulse to the second stage activating its output $(Q_B)$ to reset the timer for re-triggering.

If the NO WEB condition has ceased, the timer will not be triggered, but the shift register 128 will continue shifting for another six clock pulses until the applied pulse reaches the final stage and activates its output $(Q_H)$ which is connected to the reset input (R) of latch 126 which resets and applies a reset pulse to latch 124 through gate 128 enabled by the non-active timer. Should, however, the NO WEB condition remain the timer will have been triggered again to inhibit gate 128 before the latch 126 is reset. Thus latch 124 remains set indicating NO WEB. Provided the condition remains, the latch 126 will have been set again by count value "999" before the timer pulse ceases and enables gate 128. Thus the sequence of operations will repeat as long as the web is absent.

As long as the NO WEB condition prevails, the indication of holes or inclusions by the irregular web should be prevented. The indication of holes or inclusions is delayed until a clear indication of the presence of the web is achieved. To this end the output of latch 124 is used to energise a NO WEB display unit 132 for the operative; the latch output is also taken to an "Inhibit" timer device 134 that is activated by the resetting of latch 124 to provide a timed inhibit signal on line 136 and causing an INHIBIT display on unit 138 for the period of this signal. The inhibit signal may be timed to last up to say 200 seconds by making device 134 an electronic circuit, e.g. monostable, or an electromechanical timer. A further indicator device 140 is connected to receive the outputs of latch 124 and device 134 via NOR-gate 142 so as to display an OPERATIONAL indication when there is no NO WEB signal nor an inhibit signal. The combined operational signal is used as a control signal on line 137 for means responsive to the hole/inclusion signal from the individual camera circuits of Figures 4A and B.

Referring again to Figure 4B, it will be recalled that each camera 22a, 22b and 22c has its own hole/inclusion detection circuitry and signals these defects on respective lines 107 and 108 with 220 mS. pulses. These pulses are long enough to operate relays in subsequent circuitry. If the short pulses are required, without for example being affected by the latching and blocking action of monostables 94, 96, these pulses are outputted on lines 102 and 104 respectively. It will be noted that by separately detecting the defects "seen" by the cameras additional information is made available. The time of detection indicates where along the moving web a defect is. If the detection is made by camera 22b, it can be ascribed to the central portion of the web.   If made by camera 22a or 22c, it can be ascribed to one or other side portion.   The precise way the defect signals are used will depend on the particular web manufacture or other processing that is being undertaken.   The part of the apparatus now to be discussed is therefore by way of an example and is applied to paper making.

In Figure 5 the part 150 of the circuit is concerned with the use of the defect signals.   By way of example we shall describe the individual signalling of holes using the longer pulses on line 107 and the measuring of inclusion rate using the short pulses on line 104 of Figure 4B.   The respective pairs of lines from the cameras are denoted 107a, 104a: 107b, 104b; and 107c, 104c in Figure 5. The signals on these lines are applied to respective AND-gates, referenced 151 as a block, that receive in common the operational signal on line 137 to only allow actuation of circuit 150 when this signal is present.   We shall assume there is an operational condition so that the gates are enabled to transmit the respective signals.   It will be assumed that any hole is to be indicated immediately and to this end the pulses on lines 107a, b and c are used to activate any appropriate visual/aural indicators 152a, 152b and 152c visible to an operative attending the wind-up reel.   Since the apparatus shortly precedes the wind-up reel, a warning indication refers to the web about to enter the reel and, for example, the operative can insert a coloured ticket in the reel at this point. The colour of the ticket selected is dependent on which indicator 142 is displaying so that it is known in which of the three longitudinal web sections the hole lies.   These sections are commonly known as front, middle and back as seen from one side of the web.   The indicators can be driven by manually resettable relays for which the 220 mS pulses are adequate to operate them and whose resets are indicated by R.   For general quality control monitoring the hole pulses may be gated to a counter 154 as shown or to separate counters if desired.

Turning to inclusions, if it were required to individually indicate these the inclusion signals on the three lines 108 (Figure 4B) can be treated in the same manner as the hole signals on lines 107.

However, in addition to individually indicating inclusions it is more particularly required to monitor whether the inclusion rate exceeds a given limit. The inclusion rate is expressed as inclusions per unit area. It may be more restrictively defined as inclusions exceeding a given size per unit area. The circuit now to be described provides this facility.

In considering inclusion rate it will be recalled that the inclusion signals on line 108 are 22 mS pulses stretched from the short pulses from monostable 92 in Figure 4B. The scan period of the cameras is 1.4 mS so that a first inclusion pulse may blank a substantial number of following pulses from monostable 92. In order to monitor inclusion rate it is therefore desirable to use the inclusion pulses from monostable 92 taken over line 104. Looking again at Figure 5 the inclusion pulses on the three lines 104a, b and c are applied via the inhibit circuit 151 to an OR-gate 155 from which the inclusion pulses are applied to an inclusion rate counter 156 through a pre-settable scaling (divide-by-N) counter 157 whose scale factor (N) represents inclusion size.

An inclusion obviously has dimensions both laterally and longitudinally of the web. The area of the inclusion can be represented by summing over the successive scans the number of diodes per scan affected by the inclusion. If laterally affected diodes in each scan are to be counted, then it is necessary to use the short pulses from monostable 92. Upon a diode sensing an inclusion, it is also necessary to avoid the data at the memory address associated with that diode being up-dated to the inclusion level in that scan since once the relevant address is up-dated to the inclusion level no further detection of the inclusion in subsequent scans can occur at the memory address in question. To prevent up-dating the output of gate 155 is applied to the control circuit 72 (Figure 4A) over line 80. The circuit responds to each short inclusion pulse to inhibit the setting of the "write" level on line 74 to the RAM 52 (Figure 4A) for the short period in which normally up-dating would take place at the memory address associated with the diode giving rise to the inclusion pulse. The data at the memory address is frozen in its existing state so as to provide a reference for a possible further detection of the inclusion at the same diode position on the next scan. As long as the inclusion is detected at the same diode position in successive scans, the data at the relevant memory address remains frozen so that all comparisons made by the arithmetic unit 56 are based on the memory value preceding initial detection of the inclusion. As soon as a scan occurs at which the inclusion is no longer detected at the diode position in question, there is no inhibiting of the "write" level on line 74 and the relevant memory address is updated in that scan. The same operation occurs at any other individual diode position at which an inclusion is detected. It will be appreciated that in counting inclusion pulses from various diodes over a given area scanned it is the total inclusion area that is measured.

In going from a no web to a web present condition, the fall in light level may be signalled as an inclusion at at least a substantial number of diode positions. Consequently the relevant memory addresses would be frozen indefinitely leading to erroneous inclusion signals as long as the normal web condition obtained. To ensure unfreezing of the frozen memory addresses in these circumstances, a reset signal is applied to the control circuit 72 from a timer 82 having its trigger input connected to the output of OR-gate 155 so that it is activated by an initial inclusion pulse. Timer 82 produces a pulse of predetermined duration that is applied to control circuit 72 over line 84. The control circuit 72 is responsive to the end of the timer pulse to cause all the memory addresses to be up-dated again before responding to any further pulse from gate 155. The timer pulse duration is chosen with regard to web-speed so as to just exceed the duration of the longest inclusion expected. The end of the timer pulse also resets size counter 157 to ensure that the counter starts again from zero upon detection of a further inclusion pulse.

While the counter 157 is counting inclusion pulses, the counter 156 counts every Nth inclusion, where N is the scaling factor of counter 157. The counter 156 has a reset input R that is activated per unit of given area of web run. To this end a tacho generator 158 is coupled to any appropriate roller in the web path to supply a signal representing web speed. This signal is applied to an amplifier 160 of pre-settable gain, the gain setting being controlled by a multi-position switch device 162 set in accordance with the deckle (width) of the web so that the amplifier output signal represents area run per second. The amplifier output is taken to a voltage-to-frequency converter 164 and the frequency output applied to a pre-settable ring counter 166 which provides an output on line 158 for each unit area run as determined by the presetting of the counter. Line 158 is taken to the re-set of counter 156 so that the latter starts to count again for each set unit area. The counter 156 has a decoder 170 connected to it so as to provide an output, e.g. activating aural/visual alarm 172, if the count value exceeds a certain value indicating too high an inclusion rate. The counter values per unit selected area run can be outputted on line 174 prior to reset for subsequent analysis or for totalising over a given multiple of the unit area.

The detection of inclusions in the manner described enables slime blemishes to be detected. They are detected as large inclusions and can be singled out by setting the scaling factor N appropriately high.

It will be appreciated that the processing of hole and inclusion signals discussed above is by way of example. The processing can be adapted in accord with the material of the web being manufactured, the process of manufacture and the nature of the faults arising in it that need to be detected.

Claims

1. In a machine in which a web is moved lengthwise along a predetermined path, apparatus for monitoring at least a portion of the web for defects comprising:

a structure including an array of photo-detector devices responsive to the optical condition of the web at a zone along said path, said devices being arranged for monitoring respective areas of the web extending transversely of the path;

a circuit into which said photo-detector devices are connected to develop a respective electrical signal representing the optical condition sensed by each photo-detector, said circuit including first means responsive to said signals to repetitively provide a sequence of corresponding signals in digital form,

a memory device having a plurality of storage locations capable of storing a sequence of digital signals derived from the photo-detectors,

comparison means coupled to said first means and to said memory device for comparing the digital signal derived from each photo-detector in one sequence with the signal derived from the same photo-detector in a previous sequence as stored in the memory device and for indicating if the difference between the signals exceeds a prescribed limit; and

control means coupled to the first means and the memory device for synchronizing the operation thereof to ensure digital signals relating to the same photo-detector are applied to the comparison means.

2. Apparatus as claimed in Claim 1 in which said first means includes a scanning device coupled to said photo-detectors to produce a said sequence of signals derived therefrom and the storage locations of said memory device being addressable, said control means acting to address the memory device in synchronism with the operation of the scanning device.

3. Apparatus as claimed in Claim 2 in which the control means includes means for selectively coupling in a first condition the first means to said memory device for transferring successive digital signals into storage locations and selectively coupling in a second condition the memory device to a first input of the comparison means, a second input of which is connected to receive the current digital signal from the first means, and the control means being operative to actuate the coupling means to said second condition to allow the current digital signal for a given photo-detector to be compared with its predecessor stored in the addressed storage location of the memory device and to then actuate the coupling means to said first condition to transfer the said current digital signal into that addressed storage location to replace the signal with which it was compared.

4. Apparatus as claimed in Claim 1 in which said first means includes a respective integration arrangement associated with each photo-detector, a scanning device coupled to the integration arrangements successively to reset same to a predetermined state and to obtain from each integration arrangement, prior to said predetermined state being achieved, a signal representing the integrated response of the associated photo-detector to the optical condition since the previous re-setting.

5. Apparatus as claimed in Claim 4 in which each photo-detector comprises a photo-diode and associated capacitance constituting the integration element of said associated integration arrangement whereby the capacitor charge is a function of the conductance of the photo-diode, each integration arrangement including a switch device controlled by the scanning device to charge the capacitance to a predetermined voltage upon re-setting the integration arrangement.

6.    Apparatus as claimed in Claim 5 in which the electrical signal representing the optical condition sensed by each photo-diode is developed from the re-charge current to the associated capacitance upon re-setting of the integration circuit.

7.    Apparatus as claimed in Claim 1 in which said comparison means comprises a first arithmetic unit comparing the values represented by the two digital signals to provide a digital output signal representing the difference between the values and a signal indicative of the sign of the difference; and a second arithmetic unit responsive to said difference output signal and to a present digital value to provide a signal indicative of the difference exceeding said present value; and logic means connected to the arithmetic units and responsive to said sign-indicative signal and to said signal from the second unit to provide a defect-indicative signal when the difference between the two values exceeds the prescribed limit in one sense.

8.    Apparatus as claimed in Claim 7 in which said logic means is operable to provide a defect-indicative signal when the difference between the two signals exceeds the prescribed limit in the other sense.

9.    Apparatus as claimed in Claim 8 in which said sign-indicative signal is a binary signal whose level indicates the sign and said signal from the second unit is a binary signal that is at a first level when the said difference exceeds the prescribed limit, and said logic means includes first and second logic gates that provide respective defect-indicative signals when said signal from the second unit has said first level and the sign-indicative signal has one level or the other level respectively.

10. Apparatus as claimed in any preceding claim further comprising a comparator responsive to the series of said respective electrical signals derived from the photo-detectors or the corresponding digital signals to provide an output signal for each such signal that exceeds a reference level or reference digital value, a gate controlled by the comparator output signal for transmitting clock pulses from the control means whenever a signal of the sequence exceeds the reference level or value, a counter connected to the output of the gate to count clock pulses transmitted thereby; and a timer circuit controlling the operation of the counter, the timer being triggered by the comparator output signal to enable the counter to count clock pulses for a preselected period; and means responsive to the count value exceeding a predetermined value to provide a signal indicating that no web is present.

11. Apparatus as claimed in Claim 10 in which the timer has a reset input signal coupled to the counter for resetting the timer upon said predetermined count value being reached.

12. Apparatus as claimed in Claim 11 in which the timer re-set input is coupled to the counter via a stage of a shift register whose input is connected to receive a pulse upon said predetermined count value being achieved, said means for providing the "no web" indicative signal including a latch circuit set by the predetermined count value being achieved and a gate for applying a reset signal to the latch circuit, said gate having inputs coupled to a stage of the shift register that is a plurality of stages later than the aforementioned stage and to the timer output to allow the re-setting of the latch if the timer has not been re-triggered after re-setting.

0046058

- 5 -

13. Apparatus as claimed in Claim 3 further comprising means responsive to the indication given by said comparison means to inhibit the transfer into the addressed storage location of the current digital signal for the photo-detector giving rise to the indication.

14. Apparatus as claimed in Claim 13 comprising timer means responsive to such indication given by said comparison means to provide a signal after a predetermined interval for ensuring all the storage locations of the memory device are then up-dated with the current digital signals derived from the photo-detectors.

Fig. 1.

Fig. 2.

FIG.4A
45
ARRAY
DRIVER 44

(FIG.4A)

CLOCK SCAN
43c
43a
43b

256–STAGE SHIFT REGISTER

n    n+1

42

$T_n$    $T_{n+1}$

$D_n$    $D_{n+1}$

C    C

40

43d

46
—V
R
VIDEO
48

*Fig.3.*

90

HOLE

FIG.4A

92
MONO
2·4μs
MONO
2·4μs

INCLUSION

98

100

102

104

94
MONO
Q
Q̄

96
MONO
Q
Q̄

22ms

106
MONO

MONO

HOLE
107
220ms
108

INCLUSION

*Fig.4B*

*Fig.4A*

0046058

VIDEO (22b)
(FIG.3)

REF.

CLOCK
(FIG.4A)

COMP. *112*

*116*

*117*

*114*

*118*
T  MONO  Q̄
R

QH  SHIFT  QB
REG       I
          CLK  *130*

*110*
CLK
R  COUNTER  '999'
*120*

S  LATCH  Q
R       *124*

*126*
S  LATCH
R       Q̄

*128*

NO WEB  *132*

*142*  OPR.  *140*

TIMER  *134*  *136*  INHIBIT  *138*

*137*

FIG. 5A

4/5

0046058

OPERATIONAL

107a
107a
107b
107b
107c
107c

151

FRONT HOLE — 152a R
MID HOLE — 152b R
BACK HOLE — 152c R
HOLE COUNTER CLK — 154

155
÷N
SIZE CLK COUNT — 157

82
T TIMER

80  84

(FIG.4A)

INCLUSION COUNTER CLK R — 156

RING COUNTER PRE—SET — 158, 166

V/f CONV. — 164

DECODE — 170

ALARM — 172

174

162
160

150

10  158

FIG. 5B